# EUROPEAN PATENT APPLICATION

(11) **EP 4 825 891 A1**
(43) Date of publication of application: **21.10.2026**
(21) Application number: 25774822.8
(22) Date of filing: 08.01.2025
(51) Int. Cl.: C08G 61/02, C09D 7/20, C09D 163/00, C09D 7/63

(54) **POLYMER COMPOSITION AND COATING COMPOSITION COMPRISING SAME**

(30) Priority: 19.03.2024 KR 20240037918; 20.11.2024 KR 20240166600
(71) Applicant: Kolon Industries, Inc., Seoul 07793 (KR)
(72) Inventor: SUNG, Jong Un, Seoul 07793 (KR); KIM, Yu Sung, Seoul 07793 (KR); KIM, Sang Hun, Seoul 07793 (KR); PARK, Kyong Kook, Seoul 07793 (KR)
(74) Representative: Vossius & Partner Patentanwälte Rechtsanwälte mbB
(86) International application number: PCT/KR2025/000405
(87) International publication number: WO 2025/198158

(57) **Abstract**

The disclosure provides a polymer composition including a polymer including a unit (a) derived from an alpha-methyl styrene-based monomer and a unit (b) derived from a phenol-based monomer, wherein, in the polymer composition, an amount of an indane-based compound derived from two alpha-methyl styrene-based monomers is 5 wt% or less with respect to the total weight of the polymer composition, and an amount of an indane-based compound derived from three alpha-methyl styrene-based monomers is 0.1 wt% or less with respect to the total weight of the polymer composition. A coating film prepared from a paint composition including the polymer composition may have excellent flexural resistance, impact resistance, and chemical resistance.

## Description

### Technical Field

The disclosure relates to a polymer composition and a paint composition including the same.

### Background Art

A coating film is formed on the surface of ships/heavy duty vessels to protect structures from harsh environments. Unlike onshore structures, this coating film has to not only withstand harsh corrosive environments, but has to also have safety and ease of maintenance.

The performance of the coating film is greatly affected by the properties of a diluent mixed in the paint. Conventionally, various non-reactive components have been added as diluents for heavy duty epoxy paints, such as alkyl phenolic compounds such as nonyl phenol, dodecyl phenol, and octyl phenol, C₅-C₉ hydrocarbon resins, and oligomers of phenol and α-methylstyrene.

In particular, the alkyl phenolic compounds have been widely used as additives or surfactants for heavy duty epoxy paints requiring plasticity. However, the alkyl phenolic compounds are known to be renal toxic and endocrine disruptors, and are currently banned from being used worldwide or their scope of use is gradually being restricted.

Furthermore, during the recent substance evaluation under EU REACH, alphamethylstyrenated phenol among phenolic compounds was classified as a substance of very high concern (SVHC), and in particular, the triaryl indane-structure material among alphamethylstyrenated phenol was confirmed to be very persistent (vP) and very bioaccumulative (vB). Accordingly, there is an increasing need to develop new diluents that do not fall under SVHC regulations through control of the amount of vPvB substances.

### Disclosure of Invention

### Technical Problem

The disclosure provides a polymer composition suitable for a paint composition by controlling the amount of a very persistent (vP) and very bioaccumulative (vB) substance. In addition, the disclosure provides a polymer composition capable of improving the flexural resistance, impact resistance, and chemical resistance of a coating film prepared from the paint composition.

### Solution to Problem

One aspect of the disclosure relates to a polymer composition including a polymer including a unit (a) derived from an alpha-methyl styrene-based monomer and a unit (b) derived from a phenol-based monomer, wherein, in the polymer composition, an amount of an indane-based compound derived from two alpha-methyl styrene-based monomers is 5 wt% or less with respect to the total weight of the polymer composition, and an amount of an indane-based compound derived from three alpha-methyl styrene-based monomers is 0.1 wt% or less with respect to the total weight of the polymer composition.

Another aspect of the disclosure relates to a paint composition including the polymer composition.

### Advantageous Effects of Invention

The polymer composition according to the disclosure includes a polymer including a unit (a) derived from an alpha-methyl styrene-based monomer and a unit (b) derived from a phenol-based monomer, wherein, in the polymer composition, when an amount of an indane-based compound derived from two alpha-methyl styrene-based monomers is 5 wt% or less with respect to the total weight of the polymer composition, and an amount of an indane-based compound derived from three alpha-methyl styrene-based monomers is 0.1 wt% or less with respect to the total weight of the polymer composition, a coating film prepared from a paint composition including the polymer composition may have excellent flexural resistance, impact resistance, and chemical resistance.

In addition, when the polymer composition has an amount of an indane-based compound derived from three alpha-methyl styrene-based monomers of 0.1 wt% or less with respect to the total weight of the polymer composition, it may be applied as a diluent for an environmentally friendly paint that is free of a substance of very high concern (SVHC).

### Mode for the Invention

Hereinafter, more aspects and various embodiments of the present disclosure will be described in more detail.

The terms or words used herein should not be limited to usual or dictionary meanings, and should be interpreted as meanings and concepts corresponding to the technical idea of the present disclosure, based on the principle that the inventor can appropriately define the concepts of terms to explain the disclosure in the best manner.

The terminology used herein is used for the purpose of describing particular embodiments only and is not intended to limit the present disclosure. As used herein, the singular forms are intended to include the plural forms as well, unless the context clearly indicates otherwise. In the present disclosure, it should be understood that terms such as 'include' or 'have' are intended to specify the presence of a feature, number, step, operation, component, part or combination thereof described in the specification, but do not exclude in advance the possibility of the presence or addition of one or more other features, numbers, steps, operations, components, parts or combinations thereof.

In the disclosure, an alkyl group having 1 to 15 carbon atoms includes a methyl group, an ethyl group, a propyl group, a butyl group, a pentyl group, a hexyl group, a heptyl group, an octyl group, a nonyl group, a decyl group, and the like.

In the disclosure, an alkenyl group having 2 to 15 carbon atoms includes one or more unsaturated double bonds. The alkenyl group having 2 to 15 carbon atoms includes an ethenyl group, a propenyl group, a butenyl group, a pentenyl group, a pentadiene, a hexenyl group, a hexadiene, a hexatriene, and the like.

Specifically, a polymer composition according to one aspect of the disclosure is a polymer composition including a polymer including a unit (a) derived from an alpha-methyl styrene-based monomer and a unit (b) derived from a phenol-based monomer, wherein an amount of an indane-based compound derived from two alpha-methyl styrene-based monomers may be 5 wt% or less with respect to the total weight of the polymer composition, and an amount of an indane-based compound derived from three alpha-methyl styrene-based monomers may be 0.1 wt% or less with respect to the total weight of the polymer composition.

For example, when the polymer composition has an amount of the indane-based compound derived from three alpha-methyl styrene-based monomers of 0.1 wt% or less with respect to the total weight of the polymer composition, it may be applied as a diluent for an environmentally friendly paint that is free of a SVHC.

For example, when the amount of the indane-based compound derived from two alpha-methyl styrene-based monomers is 5 wt% or less with respect to the total weight of the polymer composition, and the amount of the indane-based compound derived from three alpha-methyl styrene-based monomers is 0.1 wt% or less, a coating film manufactured from a paint composition including the polymer composition may have excellent flexural resistance, impact resistance, and chemical resistance.

In the polymer composition, the amount of the indane-based compound derived from three alpha-methyl styrene-based monomers may be 0.05 wt% or less, 0.04 wt% or less, 0.03 wt% or less, 0.02 wt% or less, or 0.01 wt% or less, with respect to the total weight of the polymer composition. When the amount of the indane-based compound derived from three alpha-methyl styrene-based monomers included in the polymer composition is within the ranges above, the polymer composition may be more easily applied as a diluent for an environmentally friendly paint that is free of a SVHC.

By using two or more catalysts together in the preparation process of the polymer composition, the amount of the indane-based compound derived from two alpha-methyl styrene-based monomers and the amount of the indane-based compound derived from three alpha-methyl styrene-based monomers included in the polymer composition may be controlled.

The two or more catalysts may include a para-toluene sulfonic acid (PTSA) and methylaluminoxane (MAO) in toluene. When the two or more catalysts include the PTSA and the MAO in toluene, the amount of the indane-based compound derived from two alpha-methyl styrene-based monomers and the amount of the indane-based compound derived from three alpha-methyl styrene-based monomers included in the polymer composition may easily satisfy the ranges above.

The preparation of the polymer composition may be performed at a temperature in the range of 20 to 150 °C.

According to an embodiment, the alpha-methyl styrene-based monomer may be represented by Formula 1-1: 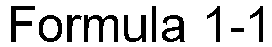 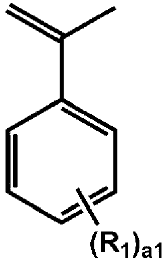 wherein, in Formula 1-1, R₁ is hydrogen, an alkyl group having 1 to 15 carbon atoms, or an alkenyl group having 2 to 15 carbon atoms, and a1 is an integer from 1 to 5.

For example, in Formula 1-1, R₁ may be hydrogen, an alkyl group having 1 to 3 carbon atoms, or an alkenyl group having 2 or 3 carbon atoms, and a1 may be an integer from 1 to 5. In Formula 1-1, R₁ may be hydrogen, a methyl group, or an isopropenyl group.

For example, the alpha-methyl styrene-based monomer may include alpha-methyl styrene.

According to an embodiment, the phenol-based monomer may be represented by Formula 1-2: 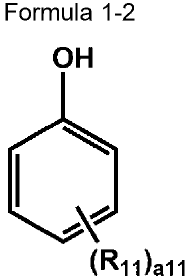 wherein, in Formula 1-2, R₁₁ is hydrogen, an alkyl group having 1 to 15 carbon atoms, or an alkenyl group having 2 to 15 carbon atoms, and a11 is an integer from 1 to 5. For example, in Formula 1-2, R₁₁ may be hydrogen, an alkyl group having 1 to 3 carbon atoms, or an alkenyl group having 2 or 3 carbon atoms, and a11 may be an integer from 1 to 5.

In Formula 1-2, R₁₁ may be hydrogen or a methyl group. For example, in Formula 1-2, R₁₁ may be a methyl group and a1 may be 1.

The phenol-based monomer may include phenol, alkylphenol, cresol, or cardanol. For example, the phenol-based monomer may include phenol or cresol. For example, the phenol-based monomer may include cresol.

According to an embodiment, the polymer composition may include a polymer including the unit (a) derived from an alpha-methyl styrene-based monomer and the unit (b) derived from a phenol-based monomer. For example, the polymer composition may include an alphamethylstyrenated phenol-based compound including the unit (a) derived from an alpha-methyl styrene-based monomer and the unit (b) derived from a phenol-based monomer.

According to an embodiment, a ratio of the number of moles of the unit (b) derived from an alpha-methyl styrene-based monomer to the number of moles of the unit (a) derived from a phenol-based monomer may be 1 to 10. For example, the ratio of the number of moles of the unit (b) derived from an alpha-methyl styrene-based monomer to the number of moles of the unit (a) derived from a phenol-based monomer in the polymer composition may be 2 to 10, 1 to 7, 1 to 5, 2 to 5, or 2 to 4.

According to an embodiment, the indane-based compound derived from three alpha-methyl styrene-based monomers may be represented by Formula 2: 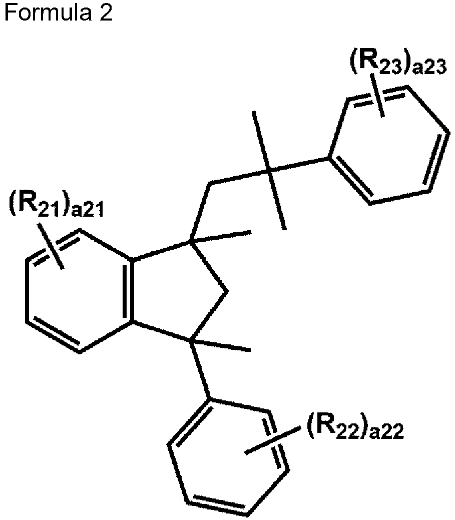 wherein, in Formula 2, R₂₁ to R₂₃ are each independently hydrogen, an alkyl group having 1 to 15 carbon atoms, or an alkenyl group having 2 to 15 carbon atoms, a21 is an integer from 1 to 4, and a22 and a23 are each independently an integer from 1 to 5.

For example, in Formula 2, R₂₁ to R₂₃ may each independently be hydrogen, an alkyl group having 1 to 3 carbon atoms, or an alkenyl group having 2 or 3 carbon atoms.

For example, in Formula 2, R₂₁ to R₂₃ may each independently be hydrogen, a methyl group, or an isopropenyl group. In Formula 2, R₂₁ to R₂₃ may each be hydrogen.

According to an embodiment, the indane-based compound derived from three alpha-methyl styrene-based monomers may include 1,3-dimethyl-1-(2-methyl-2-phenylpropyl)-3-phenylindane.

According to an embodiment, the indane-based compound derived from two alpha-methyl styrene-based monomers may be represented by Formula 3: 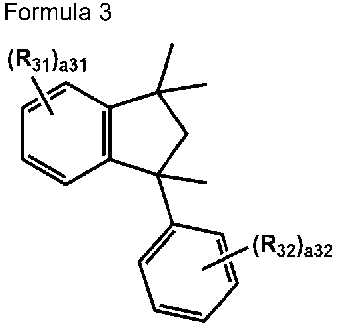 wherein, in Formula 3, R₃₁ and R₃₂ are each independently hydrogen, an alkyl group having 1 to 15 carbon atoms, or an alkenyl group having 2 to 15 carbon atoms, a31 is an integer from 1 to 4, and a32 is an integer from 1 to 5.

For example, in Formula 3, R₃₁ and R₃₂ may each independently be hydrogen, an alkyl group having 1 to 3 carbon atoms, or an alkenyl group having 2 or 3 carbon atoms, a31 may be an integer from 1 to 4, and a32 may be an integer from 1 to 5.

According to an embodiment, in Formula 3, R₃₁ and R₃₂ may be hydrogen, a methyl group, or an isopropenyl group. In Formula 3, R₃₁ and R₃₂ may each be hydrogen.

According to an embodiment, the indane-based compound derived from two alpha-methyl styrene-based monomers may include 1,3,3-trimethyl-1-phenylindane.

For example, the amount of the indane-based compound derived from two alpha-methyl styrene-based monomers included in the polymer composition may be 4.95 wt% or less, 4.85 wt% or less, 4.5 wt% or less, 4.0 wt% or less, 3.5 wt% or less, 3.0 wt% or less, 2.9 wt% or less, or 2.5 wt% or less. For example, the amount of the indane-based compound derived from two alpha-methyl styrene-based monomers included in the polymer composition may be 0.01 to 5 wt%, 0.01 to 4.9 wt%, 0.01 to 4.85 wt%, 0.01 to 4.5 wt%, 0.01 to 4.0 wt%, 0.01 to 3.5 wt%, 0.01 to 3.0 wt%, 0.01 to 2.9 wt%, 0.01 to 2.5 wt%, 0.05 to 5 wt%, 0.05 to 4.9 wt%, 0.05 to 4.85 wt%, 0.05 to 4.5 wt%, 0.05 to 4.0 wt%, 0.05 to 3.5 wt%, 0.05 to 3.0 wt%, 0.05 to 2.9 wt%, or 0.05 to 2.5 wt%.

According to an embodiment, the polymer composition may further include a pentene-based compound derived from two alpha-methyl styrene-based monomers.

For example, the pentene-based compound derived from two alpha-methyl styrene-based monomers may be represented by Formula 4-1 or 4-2: 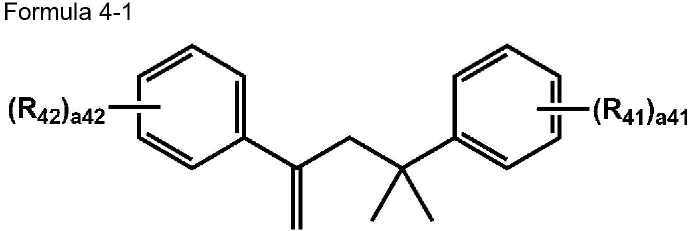 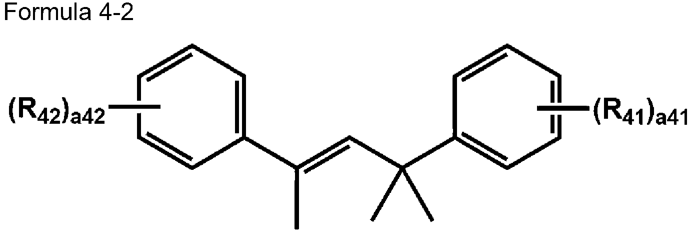 wherein, in Formulae 4-1 and 4-2, R₄₁ and R₄₂ are each independently hydrogen, an alkyl group having 1 to 15 carbon atoms, or an alkenyl group having 2 to 15 carbon atoms, and a41 and a42 are each independently an integer from 1 to 5.

For example, in Formulae 4-1 to 4-2, R₄₁ and R₄₂ are each independently hydrogen, an alkyl group having 1 to 3 carbon atoms, or an alkenyl group having 2 or 3 carbon atoms, and a41 and a42 are each independently an integer from 1 to 5. In Formulae 4-1 to 4-2, R₄₁ and R₄₂ may each independently be hydrogen, a methyl group, or an isopropenyl group. In Formulae 4-1 to 4-2, R₄₁ and R₄₂ may each be hydrogen.

According to an embodiment, the pentene-based compound derived from two alpha-methyl styrene-based monomers may include 2,4-diphenyl-4-methyl-1-pentene or 2,4-diphenyl-4-methyl-2(E)-pentene.

According to an embodiment, an amount of the pentene-based compound derived from two alpha-methyl styrene-based monomers may be 15 to 45 wt% with respect to the total weight of the polymer composition.

For example, the amount of the pentene-based compound derived from two alpha-methyl styrene-based monomers may be 18 to 45 wt%, 19 to 45 wt%, 15 to 42 wt%, 15 to 40 wt%, or 18 to 40 wt%, with respect to the total weight of the polymer composition. The amount of the pentene-based compound may be the sum of an amount of the compound represented by Formula 4-1 and an amount of the compound represented by Formula 4-2. The amount of the pentene-based compound may be the sum of an amount of 2,4-diphenyl-4-methyl-1-pentene and an amount of 2,4-diphenyl-4-methyl-2(E)-pentene.

According to an embodiment, the total amount of the pentene-based compound derived from two alpha-methyl styrene-based monomers and the indane-based compound derived from two alpha-methyl styrene-based monomers may be 18 to 50 wt% with respect to the total weight of the polymer composition.

For example, the total amount of the pentene-based compound derived from the two alpha-methyl styrene-based monomers and the indane-based compound derived from two alpha-methyl styrene-based monomers may be 19 to 50 wt%, 18 to 45 wt%, 18 to 42 wt%, 18 to 40 wt%, or 19 to 40 wt%, with respect to the total weight of the polymer composition.

According to an embodiment, the polymer composition may further include a cumyl phenol-based compound derived from one alpha-methyl styrene-based monomer and one phenol-based monomer.

According to an embodiment, a cumyl phenol-based compound derived from one alpha-methyl styrene-based monomer and one phenol-based monomer may be represented by Formula 5: 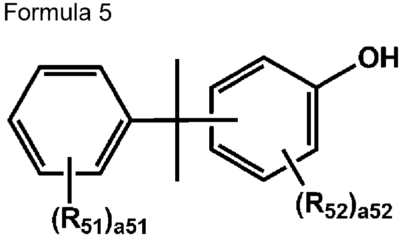 wherein, in Formula 5,
R₅₁ and R₅₂ are each independently hydrogen, an alkyl group having 1 to 15 carbon atoms, or an alkenyl group having 2 to 15 carbon atoms, a51 is an integer from 1 to 5, and a52 is an integer from 1 to 4.

For example, in Formula 5, R₅₁ and R₅₂ may each independently be hydrogen, an alkyl group having 1 to 3 carbon atoms, or an alkenyl group having 2 or 3 carbon atoms, a51 may be an integer from 1 to 5, and a52 may be an integer from 1 to 4. In Formula 5, R₅₁ may be hydrogen, a methyl group, or an isopropenyl group, and R₅₂ may be hydrogen or a methyl group. In Formula 5, R₅₁ may be hydrogen, R₅₂ may be a methyl group, and a52 may be 1.

According to an embodiment, the cumyl phenol-based compound derived from one alpha-methyl styrene-based monomer and one phenol-based monomer may include a compound represented by Formula 5-1 or a compound represented by Formula 5-2: 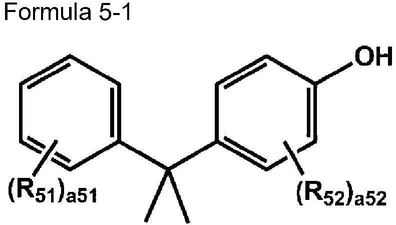 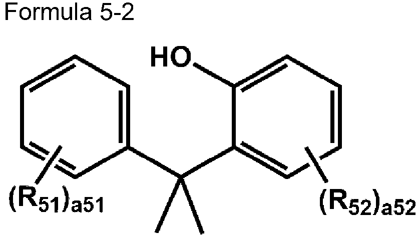 wherein, in Formulae 5-1 and 5-2,
R₅₁ and R₅₂ are each independently hydrogen, an alkyl group having 1 to 15 carbon atoms, or an alkenyl group having 2 to 15 carbon atoms, a51 is an integer from 1 to 5, and a52 is an integer from 1 to 4. In Formulae 5-1 and 5-2, R₅₁ and R₅₂, a51, and a52 are the same as described herein in connection with R₅₁ and R₅₂, a51, and a52 in Formula 5.

According to an embodiment, an amount of the cumyl phenol-based compound derived from one alpha-methyl styrene-based monomer and one phenol-based monomer may be 25 wt% or less with respect to the total weight of the polymer composition.

For example, the amount of the cumyl phenol-based compound derived from one alpha-methyl styrene-based monomer and one phenol-based monomer may be 10 to 25 wt%, 15 to 25 wt%, 18 to 25 wt%, 10 to 23 wt%, or 18 to 23 wt%, with respect to the total weight of the polymer composition.

According to an embodiment, the polymer composition may further include a heptene-based compound derived from three alpha-methyl styrene-based monomers.

According to an embodiment, the heptene-based compound derived from three alpha-methyl styrene-based monomers may be represented by Formula 6-1 or 6-2: 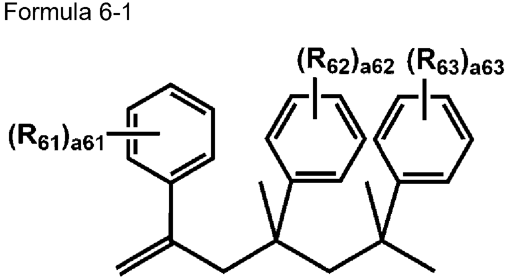 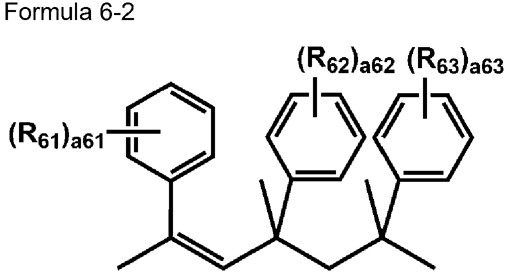 wherein, in Formulae 6-1 and 6-2, R₆₁ to R₆₃ are each independently hydrogen, an alkyl group having 1 to 15 carbon atoms, or an alkenyl group having 2 to 15 carbon atoms, and a61 to a63 are each independently an integer from 1 to 5.

For example, in Formulae 6-1 to 6-2, R₆₁ to R₆₃ are each independently hydrogen, an alkyl group having 1 to 3 carbon atoms, or an alkenyl group having 2 or 3 carbon atoms, and a61 to a63 are each independently an integer from 1 to 5. In Formulae 6-1 and 6-2, R₆₁ to R₆₃ may each independently be hydrogen, a methyl group, or an isopropenyl group. In Formulae 6-1 and 6-2, R₆₁ to R₆₃ may each be hydrogen.

According to an embodiment, the heptene-based compound derived from three alpha-methyl styrene-based monomers may include 2,4,6-triphenyl-4,6-dimethyl-1-heptene or 2,4,6-triphenyl-4,6-dimethyl-2-heptene.

According to an embodiment, an amount of the heptene-based compound derived from three alpha-methyl styrene-based monomers may be 5 to 25 wt% with respect to the total weight of the polymer composition.

For example, the amount of the heptene-based compound derived from three alpha-methyl styrene-based monomers may be 5 to 22 wt%, 5 to 20 wt%, 5 to 15 wt%, or 5 to 14 wt%, with respect to the total weight of the polymer composition.

According to an embodiment, the polymer composition may further include a dicumyl phenol-based compound derived from two alpha-methyl styrene-based monomers and one phenol-based monomer.

According to an embodiment, a dicumyl phenol-based compound derived from two alpha-methyl styrene-based monomers and one phenol-based monomer may be represented by Formula 7: 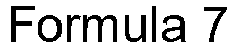 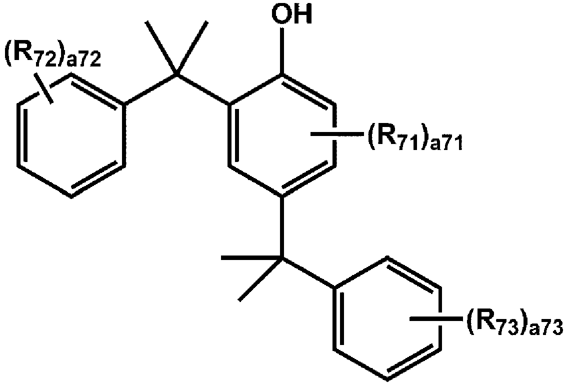 wherein, in Formula 7,
R₇₁ to R₇₃ are each independently hydrogen, an alkyl group having 1 to 15 carbon atoms, or an alkenyl group having 2 to 15 carbon atoms, a71 is an integer from 1 to 3, and a72 to a73 are each independently an integer from 1 to 5.

For example, in Formula 7, R₇₁ to R₇₃ are each independently hydrogen, an alkyl group having 1 to 3 carbon atoms, or an alkenyl group having 2 or 3 carbon atoms, a71 is an integer from 1 to 3, and a72 and a73 are each independently an integer from 1 to 5. In Formula 7, R₇₁ is hydrogen or a methyl group, and R₇₂ and R₇₃ may each independently be hydrogen, a methyl group, or an isopropenyl group. For example, in Formula 7, R₇₁ may be a methyl group, a71 may be 1, and R₇₂ and R₇₃ may each be hydrogen.

According to an embodiment, an amount of the dicumyl phenol-based compound derived from two alpha-methyl styrene-based monomers and one phenol-based monomer may be 15 to 60 wt% with respect to the total weight of the polymer composition.

For example, the amount of the dicumyl phenol-based compound derived from two alpha-methyl styrene-based monomers and one phenol-based monomer may be 20 to 60 wt%, 22 to 60 wt%, 25 to 60 wt%, 35 to 60 wt%, or 40 to 60 wt%, with respect to the total weight of the polymer composition.

According to an embodiment, a viscosity of the polymer composition may be 10 to 3,000 cps. When the viscosity of the polymer composition is within the range above, the polymer composition for a paint may be more easily introduced as a diluent for a paint composition described below. In addition, the processability and coatability of a paint composition described below may be improved. For example, the viscosity of the polymer composition may be 10 to 2,500 cps, 20 to 2,500 cps, 30 to 2,500 cps, 40 to 2,500 cps, or 40 to 2,100 cps.

According to an embodiment, a Gardner Color value of the polymer composition may be 4 or less. For example, the Gardner Color value of the polymer composition may be 3 or less, 2.6 or less, or 2.5 or less.

According to an embodiment, a weight average molecular weight (Mw) of the polymer composition may be 100 g/mol to 400 g/mol, and a number average molecular weight (Mn) of the polymer composition may be 100 g/mol to 400 g/mol.

For example, the Mw of the polymer composition may be 150 to 400 g/mol, 200 to 400 g/mol, 100 to 300 g/mol, 200 to 300 g/mol, 240 to 300 g/mol, or 250 to 300 g/mol.

For example, the Mn of the polymer composition may be 50 to 400 g/mol, 200 to 400 g/mol, 100 to 300 g/mol, 200 to 300 g/mol, 220 to 300 g/mol, or 230 to 300 g/mol.

According to an embodiment, the polymer composition may be a polymer composition for an epoxy paint. For example, the polymer composition may be applied to a paint composition including an epoxy polymer.

Another aspect of the disclosure provides a paint composition including the polymer composition for a paint.

According to an embodiment, the paint composition may include an epoxy polymer and the polymer composition for a paint described above. According to an embodiment, the epoxy polymer may be a bisphenol-A type epoxy polymer. For example, the bisphenol-A type epoxy polymer may be a polymerization reaction product of bisphenol A and epichlorohydrin.

According to an embodiment, an amount of the polymer composition for a paint may be 1 to 30 wt% with respect to the total weight of the paint composition.

According to an embodiment, the paint composition may further include a pigment, a solvent, or an additive.

Examples of the pigment include an inorganic pigment or an organic pigment. The inorganic pigment may be one or more selected from the group consisting of chromates (lead chromate, chromium vermillion), ferrocyanides (Prussian blue), sulfides (Cadmium Yellow, Cadmium Red), oxides (titanium oxide, bengala(iron(III) oxide), iron black, zinc oxide), sulfates (barium sulfate, lead sulfate), silicates (Ultramarine, calcium silicate), carbonates (calcium carbonate, magnesium carbonate), phosphates (Cobalt Violet), metal powders (aluminum powders, bronze), and carbon (carbon black).

The organic pigment may be one or more selected from the group consisting of azo pigments (Benzidine Yellow, Hansa Yellow, Vulcan Orange, Permanent Red F5R, Carmine 6B, Lake Red C, Chromophthal Red, Chromophthal Yellow) and phthalocyanine pigments (Phthalocyanine Blue, Phthalocyanine Green).

Examples of the solvent may include: aromatic hydrocarbon-based solvents such as toluene, xylene, Solvesso #100, and Solvesso #150; aliphatic hydrocarbon-based solvents such as hexane, heptane, octane, and decane; and ester-based solvents such as methyl acetate, ethyl acetate, isopropyl acetate, butyl acetate, amyl acetate, ethyl formate, and butyl propionate. Examples of water-miscible organic solvents that may also be used may include: alcohol-based solvents such as methanol, ethanol, propanol, and butanol; ketone-based solvents such as acetone, methyl ethyl ketone, and cyclohexanone; and glycol ether-based solvents such as ethylene glycol (mono, di)methyl ether, ethylene glycol (mono, di)ethyl ether, ethylene glycol monopropyl ether, ethylene glycol monoisopropyl ether, ethylene glycol monobutyl ether, diethylene glycol (mono, di)methyl ether, diethylene glycol (mono, di)ethyl ether, diethylene glycol monoisopropyl ether, diethylene glycol monobutyl ether, triethylene glycol (mono, di)methyl ether, propylene glycol (mono, di)methyl ether, propylene glycol monopropyl ether, propylene glycol monobutyl ether, and dipropylene glycol (mono, di)methyl ether.

The additive may include various types of lubricants, antifoaming agents, leveling agents, lubricants, curing agents, curing aids, and the like. The curing agents may include an amine-based curing agent or an amide-based curing agent. The curing aids may include a melamine polymer, a benzoguanamine polymer, an isocyanate polymer, and the like.

Hereinafter, the present disclosure will be described in more detail through Examples. These Examples are for illustrative purposes only to describe the present disclosure in more detail, and it will be apparent to those skilled in the art that these examples should not be construed as limiting the scope of the present disclosure.

### Example 1 (PTSA+MAO catalyst, o-cresol:AMS=1:2.85)

In a four-necked flask equipped with a stirrer, a condenser, and a thermometer, 548 g of xylene, 400 g (3.698 mol) of o-cresol, 6.58 g (0.038 mol) of para-toluene sulfonic acid (PTSA), and 6.58 g of a 10% methylaluminoxane (MAO) in toluene were added, heated to 80 °C and then stirred for 30 minutes. 1,245 g (10.535 mol) of an α-methyl styrene (AMS) was uniformly added to the flask at 80 °C for 2 hours and the resulting mixture was aged for 2 hours.

After the reaction was completed, 2.6 g of 50% caustic soda and 272 g of water were added to the resulting mixture in the flask, and the mixture was heated to 80 °C and then stirred for 30 minutes. After the resulting solution was left for 30 minutes, water separation was performed to remove a water layer from the lower portion of the flask. This process was repeated twice to perform a washing process, and the washing process was performed until the final water layer in the lower portion of the flask had a pH of 6 to 8. To remove the solvent (xylene), degassing was performed at a temperature of 175 °C and a pressure of less than 20 torr to prepare a polymer composition.

The prepared polymer composition had a yield of 98.5 %, a viscosity of 895 cps (@25 °C), a NV(non-volatile) of 98.8 %, a color of a Gardner Color value of 0.8, a weight average molecular weight (Mw) of 281 g/mol, and a number average molecular weight (Mn) of 261 g/mol. Gas chromatography-mass spectrometry (GC-MS) analysis results showed that the amount of a trimethylphenylindane (TMPI) included in the polymer composition was 0.08 wt% and 1,3-dimethyl-1-(2-methyl-2-phenylpropyl)-3-phenylindane was not detected. The amounts of other components are shown in Table 2 below.

### Example 2 (PTSA+MAO catalyst, o-cresol:AMS=1:2.85)

A polymer composition was prepared in the same manner as in Example 1, except that the amount of the PTSA was changed to 14.81 g (0.086 mol). The prepared polymer composition had a yield of 98.3 %, a viscosity of 2,060 cps (@25 °C), a NV of 99.17 %, a color of a Gardner Color value of 2.4, a Mw of 289 g/mol, and a Mn of 265 g/mol. GC-MS analysis results showed that the amount of TMPI included in the polymer composition was 0.08 wt% and 1,3-dimethyl-1-(2-methyl-2-phenylpropyl)-3-phenylindane was not detected. The amounts of other components are shown in Table 2 below.

### Example 3 (PTSA+MAO catalyst, o-cresol:AMS=1:3.66)

In a four-necked flask equipped with a stirrer, a condenser, and a thermometer, 667 g of xylene, 400 g (3.698 mol) of o-cresol, 3 g (0.017 mol) of PTSA, and 3 g of a 10% MAO in toluene were added, heated to 80 °C and then stirred for 30 minutes. 1,600 g (13.538 mol) of an AMS was uniformly added to the flask at 80 °C for 2 hours and the resulting mixture was aged for 2 hours.

After the reaction was completed, 1.6 g of 50% caustic soda and 329 g of water were added to the resulting mixture in the flaks, and the mixture was heated to 80 °C and then stirred for 30 minutes. After the resulting solution was left for 30 minutes, water separation was performed to remove a water layer from the lower portion of the flask. This process was repeated twice to perform a washing process, and the washing process was performed until the final water layer in the lower portion of the flask had a pH of 6 to 8. To remove the solvent (xylene), degassing was performed at a temperature of 175 °C and a pressure of less than 20 torr to prepare a polymer composition.

The prepared polymer composition had a yield of 98.2 %, a viscosity of 486 cps (@25 °C), a NV of 98.4 %, a color of a Gardner Color value of 2.6, a Mw of 259 g/mol, and a Mn of 237 g/mol. GC-MS analysis results showed that the amount of a TMPI included in the polymer composition was 0.08 wt%, and 1,3-dimethyl-1-(2-methyl-2-phenylpropyl)-3-phenylindane was not detected. The amounts of other components are shown in Table 2 below.

### Example 4 (PTSA+MAO catalyst, o-cresol:AMS=1:4.91)

In a four-necked flask equipped with a stirrer, a condenser, and a thermometer, 848 g of xylene, 400 g (3.698 mol) of o-cresol, and 2,146 g (18.161 mol) of an AMS were added, heated to 40 °C and then stirred for 30 minutes. 3.82 g (0.022 mol) of a PTSA and 3.82 g of a 10% MAO in toluene were added the flask, and the resulting mixture was heated to 80 °C and then was aged for 4 hours.

After the reaction was completed, 1.5 g of 50% caustic soda and 418 g of water were added to the resulting mixture in the flask, and the mixture was heated to 80 °C and then stirred for 30 minutes. After the resulting solution was left for 30 minutes, water separation was performed to remove a water layer from the lower portion of the flask. This process was repeated twice to perform a washing process, and the washing process was performed until the final water layer in the lower portion of the flask had a pH of 6 to 8. To remove the solvent (xylene), degassing was performed at a temperature of 175 °C and a pressure of less than 20 torr to prepare a polymer composition.

The prepared polymer composition had a yield of 99.2 %, a viscosity of 130cps (@25 °C), a NV of 98.2 %, a color of a Gardner Color value of 2.3, a Mw of 241 g/mol, and a Mn of 222 g/mol. GC-MS analysis results showed that the amount of a TMPI included in the polymer composition was 0.08 wt% and 1,3-dimethyl-1-(2-methyl-2-phenylpropyl)-3-phenylindane was not detected. The amounts of other components are shown in Table 2 below.

### Example 5 (PTSA+MAO catalyst, phenol:AMS=1:4.91)

In a four-necked flask equipped with a stirrer, a condenser, and a thermometer, 955 g of xylene, 400 g (4.25 mol) of phenol, 10.03 g (0.058 mol) of PTSA, and 10.03 g of a 10% MAO in toluene were added, heated to 80 °C and then stirred for 30 minutes. 2,466 g (20.866 mol) of an AMS was uniformly added to the flask for 2 hours and the resulting mixture was aged for 2 hours.

After the reaction was completed, 4.0 g of 50% caustic soda and 470 g of water were added to the resulting mixture in the flask, and the mixture was heated to 80 °C and then stirred for 30 minutes. After the resulting solution was left for 30 minutes, water separation was performed to remove a water layer from the lower portion of the flask. This process was repeated twice to perform a washing process, and the washing process was performed until the final water layer in the lower portion of the flask had a pH of 6 to 8. To remove the solvent (xylene), degassing was performed at a temperature of 175 °C and a pressure of less than 20 torr to prepare a polymer composition.

The prepared polymer composition had a yield of 98.6 %, a viscosity of 990 cps (@25 °C), a NV of 97.8 %, a color of a Gardner Color value of 1.2, a Mw of 283 g/mol, and a Mn of 247 g/mol. GC-MS analysis results showed that the amount of a TMPI included in the polymer composition was 2.49 wt% and 1,3-dimethyl-1-(2-methyl-2-phenylpropyl)-3-phenylindane was not detected. The amounts of other components are shown in Table 2 below.

### Example 6 (PTSA+MAO catalyst, o-cresol:AMS=1:2.85)

A polymer composition was prepared in the same manner as in Example 1, except that the reaction temperature was changed from 80 °C to 130 °C. The prepared polymer composition had a yield of 98.4 %, a viscosity of 775 cps (@25 °C), a NV of 98.4 %, a color of a Gardner Color value of 2.2, a Mw of 270 g/mol, and a Mn of 234 g/mol. GC-MS analysis results showed that the amount of a TMPI included in the polymer composition was 4.91 wt% and 1,3-dimethyl-1-(2-methyl-2-phenylpropyl)-3-phenylindane was not detected. The amounts of other components are shown in Table 2 below.

### Example 7 (PTSA+MAO catalyst, o-cresol:AMS=1:2.85)

A polymer composition was prepared in the same manner as in Example 1, except that the reaction temperature was changed from 80 °C to 110 °C. The prepared polymer composition had a yield of 98.6 %, a viscosity of 832 cps (@25 °C), a NV of 98.7 %, a color of a Gardner Color value of 1.6, a Mw of 274 g/mol, and a Mn of 242 g/mol. GC-MS analysis results showed that the amount of a TMPI included in the polymer composition was 3.37 wt% and 1,3-dimethyl-1-(2-methyl-2-phenylpropyl)-3-phenylindane was not detected. The amounts of other components are shown in Table 2 below.

### Comparative Example 1 (o-cresol + AMS, BF₃ phenolate catalyst)

A polymer composition was prepared in the same manner as in Example 1, except that the reaction was performed by using 6.58 g of BF₃ phenolate instead of the PTSA and the 10% MAO in toluene as a catalyst. The prepared polymer composition had a yield of 96.3 %, a viscosity of 1,110 cps (@25 °C), a NV of 96.22 %, a color of a Gardner Color value of 1.5, a Mw of 293 g/mol, and a Mn of 261 g/mol. GC-MS analysis results showed that the amount of a TMPI included in the polymer composition was 15.35 wt% and the amount of a 1,3-dimethyl-1-(2-methyl-2-phenylpropyl)-3-phenylindane was 14.62 wt%. The amounts of other components are shown in Table 2 below.

### Comparative Example 2 (o-cresol + AMS, BF₃ phenolate catalyst)

A polymer composition was prepared in the same manner as in Example 6, except that the reaction was performed by using 6.58 g of BF₃ phenolate instead of the PTSA and the 10% MAO in toluene as a catalyst. The prepared polymer composition had a yield of 96.3 %, a viscosity of 830 cps (@25 °C), a NV of 97.35 %, a color of a Gardner Color value of 2.9, a Mw of 291 g/mol, and a Mn of 268 g/mol. GC-MS analysis results showed that the amount of a TMPI included in the polymer composition was 19.74 wt% and the amount of a 1,3-dimethyl-1-(2-methyl-2-phenylpropyl)-3-phenylindane was 12.72 wt%. The amounts of other components are shown in Table 2 below.

### Comparative Example 3 (o-cresol + AMS, PTSA + 85 % phosphoric acid catalyst)

A polymer composition was prepared in the same manner as in Example 6, except that the reaction was performed by using 6.58 g (0.038 mol) of the PTSA and 6.58 g of a 85 % phosphoric acid instead of the PTSA and the 10% MAO in toluene as a catalyst and changing the reaction temperature from 130 °C to 155 °C. The prepared polymer composition had a yield of 95.1 %, a viscosity of 707 cps (@25 °C), a NV of 96.83 %, a color of a Gardner Color value of 3.7, a Mw of 283 g/mol, and a Mn of 256 g/mol. GC-MS analysis results showed that the amount of a TMPI included in the polymer composition was 6.53 wt% and the amount of a 1,3-dimethyl-1-(2-methyl-2-phenylpropyl)-3-phenylindane was 0.79 wt%. The amounts of other components are shown in Table 2 below.

### Comparative Example 4 (PL-50, Phenol+AMS, BF₃ phenolate catalyst)

PL-50 (manufactured by Kolon Industries, mass-produced product) was prepared. As a result of analyzing the physical properties of PL-50, PL-50 had a viscosity of 54 cps (@25 °C), a NV of 96.31 %, a color of a Gardner Color value of 0.3, a Mw of 243 g/eq, and a Mn of 219 g/eq. GC-MS analysis results showed that the amount of a TMPI included in the polymer composition was 10.19 % and the amount of a 1,3-dimethyl-1-(2-methyl-2-phenylpropyl)-3-phenylindane was 23 %. The amounts of other components are shown in Table 2 below.

### Comparative Example 5 (PL-1000S, Phenol+AMS, BF₃ phenolate catalyst)

PL-1000S (manufactured by Kolon Industries, mass-produced product) was prepared. As a result of analyzing the physical properties of PL-1000S, PL-1000S had a viscosity of 930 cps (@25 °C), a NV of 97.5 %, a color of a Gardner Color value of 0.8, a Mw of 296 g/eq, and a Mn of 254 g/eq. GC-MS analysis results showed that the amount of a TMPI included in the polymer composition was 16.87 % and the amount of a 1,3-dimethyl-1-(2-methyl-2-phenylpropyl)-3-phenylindane was 12.42 %. The amounts of other components are shown in Table 2 below.

**[Table 1]**

| Classification | Phenol-based monomer | | Alpha-methyl styrene-based monomer | | Molar ratio | Reaction temperature (°C) | Catalyst |
|---|---|---|---|---|---|---|---|
| | Type | Number of moles | Type | Number of moles | | | |
| Example 1 | o-cresol | 3.698 | AMS | 10.541 | 2.85 | 80 | PTSA (6.58 g, 0.038 mol) +MAO (6.58 g) |
| Example 2 | o-cresol | 3.698 | AMS | 10.541 | 2.85 | 80 | PTSA (14.81 g, 0.086 mol) +MAO (6.58 g) |
| Example 3 | o-cresol | 3.698 | AMS | 13.538 | 3.66 | 80 | PTSA (3 g, 0.017 mol) +MAO (3 g) |
| Example 4 | o-cresol | 3.698 | AMS | 18.161 | 4.91 | 80 | PTSA (3.82 g, 0.022 mol) +MAO (3.82 g) |
| Example 5 | Phenol | 4.25 | AMS | 20.866 | 4.91 | 80 | PTSA (10.03 g, 0.058 mol) +MAO (10.03 g) |
| Example 6 | o-cresol | 3.698 | AMS | 10.541 | 2.85 | 130 | PTSA (6.58 g, 0.038 mol) +MAO (6.58 g) |
| Example 7 | o-cresol | 3.698 | AMS | 10.541 | 2.85 | 110 | PTSA (6.58 g, 0.038 mol) +MAO (6.58 g) |
| Comparative Example 1 | o-cresol | 3.698 | AMS | 10.541 | 2.85 | 80 | BF₃ phenolate (6.58 g) |
| Comparative Example 2 | o-cresol | 3.698 | AMS | 10.541 | 2.85 | 130 | BF₃ phenolate (6.58 g) |
| Comparative Example 3 | o-cresol | 3.698 | AMS | 10.541 | 2.85 | 155 | PTSA (6.58 g, 0.038 mol) +85 % phosphoric Acid (6.58 g) |

**[Table 2]**

| Classification | Example 1 | Example 2 | Example 3 | Example 4 | Example 5 | Example 6 | Example 7 |
|---|---|---|---|---|---|---|---|
| 1,3-dimethyl-1-(2-methyl-2-phenylpropyl)-3-phenylindane | ND | ND | ND | ND | ND | ND | ND |
| Trimethylphenylindane (TMPI) | 0.08 | 0.08 | 0.08 | 0.08 | 2.49 | 4.91 | 3.37 |
| 2,4-diphenyl-4-methyl-1-pentene | 6.59 | 5.79 | 9.51 | 12.45 | 5.11 | 6.61 | 5.43 |
| 2,4-diphenyl-4-methyl-2(E)-pentene | 16.20 | 13.86 | 20.66 | 28.87 | 13.87 | 15.84 | 17.78 |
| Cumyl phenol-based compound | 22.91 | 18.62 | 21.31 | 20.99 | 0.50 | 20.08 | 19.86 |
| 2,4,6-triphenyl-4,6-dimethyl-1-heptene | 5.31 | 4.96 | 4.59 | 9.94 | 15.99 | 4.96 | 4.33 |
| 2,4,6-triphenyl-4,6-dimethyl-2-heptene | 2.22 | 1.98 | 2.03 | 4.46 | 5.80 | 2.38 | 3.44 |
| o,p-dicumyl phenol-based compound | 45.70 | 54.25 | 40.82 | 22.83 | 45.40 | 44.39 | 45.82 |

| Classification | Comparative Example 1 | Comparative Example 2 | Comparative Example 3 | Comparative Example 4 | Comparative Example 5 |
|---|---|---|---|---|---|
| 1,3-dimethyl-1-(2-methyl-2-phenylpropyl)-3-phenylindane | 14.62 | 12.72 | 0.79 | 23.00 | 12.42 |
| trimethylphenylindane (TMPI) | 15.35 | 19.74 | 6.53 | 10.19 | 16.87 |
| 2,4-diphenyl-4-methyl-1-pentene | 5.81 | 4.33 | 7.08 | 15.14 | 3.71 |
| 2,4-diphenyl-4-methyl-2(E)-pentene | 8.77 | 7.88 | 14.99 | 7.05 | 9.38 |
| Cumyl phenol-based compound | 8.03 | 10.24 | 19.55 | 5.37 | 9.11 |
| 2,4,6-triphenyl-4,6-dimethyl-1-heptene | 7.18 | 8.06 | 5.43 | 13.92 | 6.43 |
| 2,4,6-triphenyl-4,6-dimethyl-2-heptene | 2.85 | 3.08 | 3.64 | 13.14 | 2.44 |
| o,p-dicumyl phenol-based compound | 36.73 | 33.79 | 41.67 | 11.56 | 33.71 |

### Evaluation Example 1 (Evaluation of performance of coating film)

### Formation of coating film

Each of the polymer compositions of Examples 1 to 7 and Comparative Examples 1 to 5 was used as a diluent to prepare a liquid paint and form a coating film.

In a cylindrical plastic container, 284 g of a liquid bisphenol-A type epoxy resin (KE-8128, commercially available from Kolon Industries) and 28.4 g of each of the polymer compositions prepared according to Examples 1 to 7 and Comparative Examples 1 to 5 were mixed with 42 g of xylene and 10 g of a methyl isobutyl ketone (MIBK) and then the mixture was stirred.

0.6 g of a wetting agent was put into to each cylindrical plastic container, and 21.5 g of bentone (Viscogen138) was added dropwise thereto by using a high speed mixer, and the mixture was dispersed while being stirred as vigorously as possible until the bentone particles were no longer visible. Next, 117 g of TiO₂, 358 g of talc, 4.8 g of iron oxide black, and 113 g of barium sulfate (BaSO₄) were added thereto, then additionally 23 g of a xylene and 25 g of a MIBK as solvents were added thereto, and the mixture was stirred at a speed of 1000 rpm for 15 minutes.

To the stirred mixture, glass beads were added in an amount of 1.5 paper cups. Dispersion was performed by using a shaker, and the particle size was measured every 20 minutes. Dispersion was terminated when the particle size was 40 µm or less. The glass beads were filtered out to prepare a paint composition.

LITE 2002 (AHEW = 104 g/eq), which is a curing agent of phenalkamine type, and the prepared paint composition were mixed at an equivalent ratio of epoxy to active hydrogen of 1:1 to thereby prepare a composition. Afterwards, the composition was applied onto a glass specimen and an iron specimen at a thickness of 75 µm and 120 µm, respectively, and then completely dried at room temperature to form a coating film.

The physical properties of the formed coating film were measured by using the following method.
(1) Flexural adhesion (flexural resistance) (ASTM E643, Erichsen Cupping test): When each of the coating films was subjected to gradual deformation by indentation (pressing and pushing), the cracking resistance and the resistance to peeling from the metal substrate were evaluated. The measurement results are shown in Table 3 below.
(2) Impact resistance (ASTM D2794): Using a Dupont-type impact tester, a weight with a load of 1 kg was dropped from a low height (400 mm) on each of the coating films, and the height at which each coating film was peeled (cracked) was measured. The measurement results are shown in Table 3 below.
(3) Solvent resistance and acid/base resistance: Xylene, a 5% sulfuric acid solution, and a 5% caustic soda were dropped onto the surface of each coating film and left at room temperature for 72 hours, and the degree of damage to the coating film was visually assessed. When the degree of damage to the coating film was high, it was evaluated as point 1 (Bad), and when the degree of damage to the coating film was low, it was evaluated as point 10 (Good), and the measurement results are shown in Table 3 below.

**[Table 3]**

| | Flexural resistance (mm) | Impact resistance (1000N*mm) | Chemical resistance | |
|---|---|---|---|---|
| | | | Solvent resistance | Acid/Base |
| Example 1 | 6.92 | 650 | 9 | 9/9 |
| Example 2 | 6.97 | 650 | 9 | 9/9 |
| Example 3 | 6.72 | 650 | 9 | 9/9 |
| Example 4 | 6.64 | 650 | 9 | 9/9 |
| Example 5 | 6.98 | 650 | 9 | 9/9 |
| Example 6 | 6.19 | 650 | 9 | 9/9 |
| Example 7 | 6.42 | 650 | 9 | 9/9 |
| Comparative Example 1 | 3.87 | 450 | 6 | 6/6 |
| Comparative Example 2 | 3.66 | 450 | 6 | 5/5 |
| Comparative Example 3 | 4.15 | 450 | 6 | 6/6 |
| Comparative Example 4 | 4.84 | 450 | 7 | 7/7 |
| Comparative Example 5 | 5.22 | 450 | 7 | 7/7 |

As shown in Table 3 above, the paint compositions including the polymer compositions according to Examples 1 to 7 had improved flexural resistance, impact resistance, and chemical resistance of the prepared coating film.

Therefore, the paint composition according to the disclosure may easily realize a coating film with improved flexural resistance, impact resistance, and chemical resistance.

The Examples and Comparative Examples above have been described as examples to describe the present disclosure, and therefore, the present disclosure is not limited thereto. It will be apparent to those skilled in the art that various modifications may be made therein to enable the implement of the present disclosure, and therefore, the technical protection scope of the present disclosure should be defined by the appended claims.

## Claims

1. A polymer composition comprising a polymer comprising a unit (a) derived from an alpha-methyl styrene-based monomer and a unit (b) derived from a phenol-based monomer,
wherein, in the polymer composition, an amount of an indane-based compound derived from two alpha-methyl styrene-based monomers is 5 wt% or less with respect to a total weight of the polymer composition, and an amount of an indane-based compound derived from three alpha-methyl styrene-based monomers is 0.1 wt% or less with respect to the total weight of the polymer composition.

2. The polymer composition of claim 1,
wherein the alpha-methyl styrene-based monomer is represented by Formula 1-1, and
the phenol-based monomer is represented by Formula 1-2: 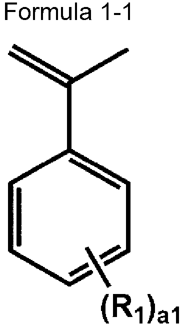 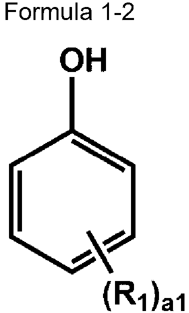
wherein, in Formulae 1-1 and 1-2,
R₁ is hydrogen, an alkyl group having 1 to 15 carbon atoms, or an alkenyl group having 2 to 15 carbon atoms, and
a1 is an integer from 1 to 5.

3. The polymer composition of claim 2,
wherein the phenol-based monomer comprises cresol.

4. The polymer composition of claim 1,
wherein the indane-based compound derived from the three alpha-methyl styrene-based monomers is represented by Formula 2: 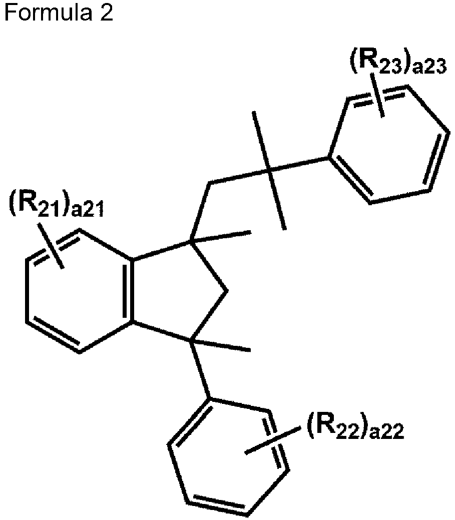
wherein, in Formula 2,
R₂₁ to R₂₃ are each independently hydrogen, an alkyl group having 1 to 15 carbon atoms, or an alkenyl group having 2 to 15 carbon atoms, a21 is an integer from 1 to 4,
a22 and a23 are each independently an integer from 1 to 5.

5. The polymer composition of claim 1,
wherein the indane-based compound derived from the two alpha-methyl styrene-based monomers is represented by Formula 3: 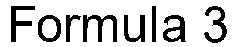 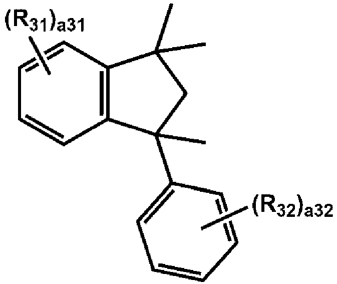
wherein, in Formula 3,
R₃₁ and R₃₂ are each independently hydrogen, an alkyl group having 1 to 15 carbon atoms, or an alkenyl group having 2 to 15 carbon atoms,
a31 is an integer from 1 to 4, and
a32 is an integer from 1 to 5.

6. The polymer composition of claim 1,
further comprising a pentene-based compound derived from two alpha-methyl styrene-based monomers.

7. The polymer composition of claim 6,
wherein the pentene-based compound derived from the two alpha-methyl styrene-based monomers is represented by Formula 4-1 or 4-2: 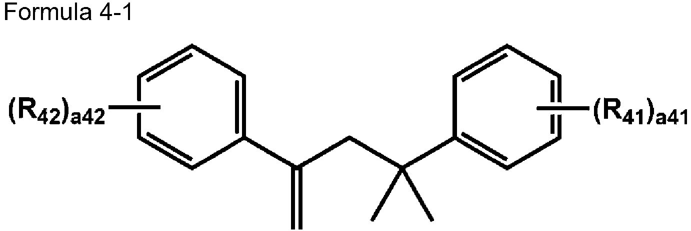 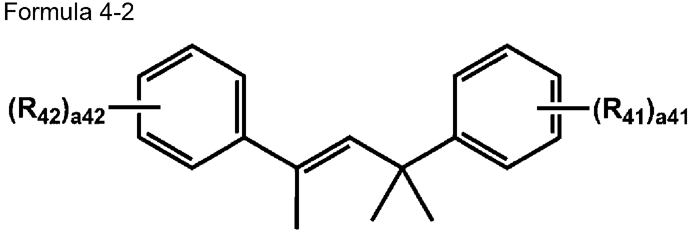
wherein, in Formulae 4-1 and 4-2,
R₄₁ and R₄₂ are each independently hydrogen, an alkyl group having 1 to 15 carbon atoms, or an alkenyl group having 2 to 15 carbon atoms, and a41 and a42 are each independently an integer from 1 to 5.

8. The polymer composition of claim 6,
wherein an amount of the pentene-based compound derived from the two alpha-methyl styrene-based monomers is 15 to 45 wt% with respect to the total weight of the polymer composition.

9. The polymer composition of claim 6,
wherein a total amount of the pentene-based compound derived from two alpha-methyl styrene-based monomers and the indane-based compound derived from the two alpha-methyl styrene-based monomers is 18 to 50 wt% with respect to the total weight of the polymer composition.

10. The polymer composition of claim 1,
further comprising a cumyl phenol-based compound derived from one alpha-methyl styrene-based monomer and one phenol-based monomer.

11. The polymer composition of claim 10,
wherein the cumyl phenol-based compound derived from the one alpha-methyl styrene-based monomer and the one phenol-based monomer is represented by Formula 5: 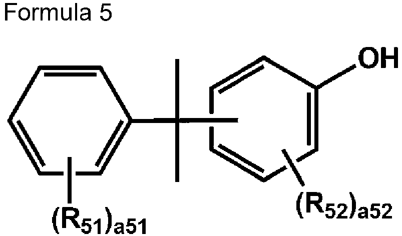
wherein, in Formula 5,
R₅₁ and R₅₂ are each independently hydrogen, an alkyl group having 1 to 15 carbon atoms, or an alkenyl group having 2 to 15 carbon atoms, a51 is an integer from 1 to 5, and
a52 is an integer from 1 to 4.

12. The polymer composition of claim 10,
wherein an amount of the cumyl phenol-based compound derived from the one alpha-methyl styrene-based monomer and the one phenol-based monomer is 25 wt% or less with respect to the total weight of the polymer composition.

13. The polymer composition of claim 1,
further comprising a heptene-based compound derived from the three alpha-methyl styrene-based monomers.

14. The polymer composition of claim 13,
wherein the heptene-based compound derived from the three alpha-methyl styrene-based monomers is represented by Formula 6-1 or 6-2: 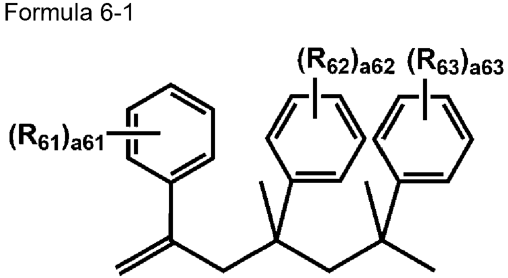 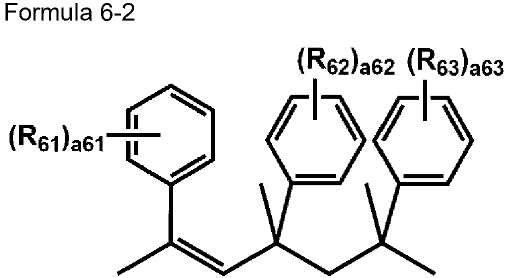
wherein, in Formulae 6-1 and 6-2,
R₆₁ to R₆₃ are each independently hydrogen, an alkyl group having 1 to 15 carbon atoms, or an alkenyl group having 2 to 15 carbon atoms, and a61 to a63 are each independently an integer from 1 to 5.

15. The polymer composition of claim 13,
wherein an amount of the heptene-based compound derived from the three alpha-methyl styrene-based monomers is 5 to 25 wt% with respect to the total weight of the polymer composition.

16. The polymer composition of claim 1,
further comprising a dicumyl phenol-based compound derived from two alpha-methyl styrene-based monomers and one phenol-based monomer.

17. The polymer composition of claim 16,
wherein the dicumyl phenol-based compound derived from the two alpha-methyl styrene-based monomers and the one phenol-based monomer is represented by Formula 7: 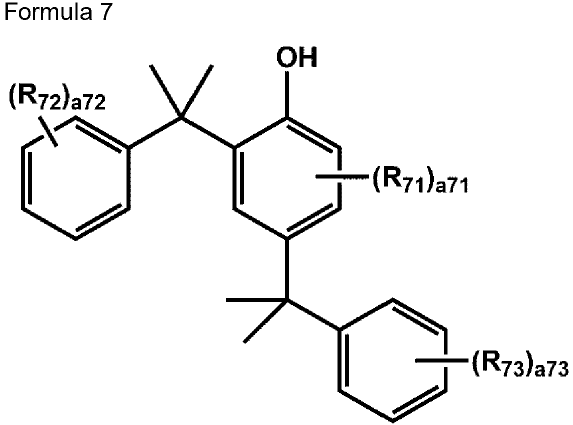
wherein, in Formula 7,
R₇₁ to R₇₃ are each independently hydrogen, an alkyl group having 1 to 15 carbon atoms, or an alkenyl group having 2 to 15 carbon atoms, a71 is an integer from 1 to 3, and
a72 and a73 are each independently an integer from 1 to 5.

18. The polymer composition of claim 16,
wherein an amount of the dicumyl phenol-based compound derived from the two alpha-methyl styrene-based monomers and the one phenol-based monomer is 15 to 60 wt% with respect to the total weight of the polymer composition.

19. A paint composition comprising the polymer composition of claim 1.

20. The paint composition of claim 16,
further comprising an epoxy polymer.
